# EUROPEAN PATENT APPLICATION

(11) **EP 1 881 642 A1**
(43) Date of publication of application: **23.01.2008**
(21) Application number: 06014978.8
(22) Date of filing: 19.07.2006
(51) Int. Cl.: H04L 12/24, H04L 12/26

(54) **Monitoring network information**

(71) Applicant: Nokia Siemens Networks GmbH & Co. KG, 81541 München (DE)
(72) Inventor: Redol, Joao, 1700-156 Lissabon (PT); Neves, Joao, 2755-241 Alcabideche (PT)
(74) Representative: Kley, Hansjörg

(57) **Abstract**

The provided invention is a method, a system and a computer program product for monitoring information of a network. The invention comprises:
- selecting at least two network regions (R1, R2, R3) from a plurality of network elements (NE1, NE3, NE10);
- selecting for each of the selected network regions (R1, R2, R3) one or more views (V1, V2, V3) representing relevant information for the selected network region (R1, R2, R3) for monitoring purposes; and
- monitoring the network information of the selected network regions (R1, R2, R3) by means of the selected views (V1, V2, V3) arranged in one single display.

## Description

The present invention relates to a method according to the preamble of claim 1, to a system according the preamble of claim 4 and to a computer program product according to the preamble of claim 5.

In recent years, the fast growing of communications networks and the large amount of services over such networks have led to a remarkable growth in traffic and in the complexity of such communication networks.

In complex communications networks, network managers are faced with the challenge of being capable of defining and monitoring a huge amount of network relevant data in an efficient manner.

In order to define and control the parameters of their managed communication networks, a variety of network software management tools have been developed for network managers.

To facilitate the monitoring operations of the network managers, such network software management tools typically make use of Graphical User Interfaces (GUIs).

GUIs are essential for defining, understanding, exploring, monitoring and/or controlling network data, since they allow the network managers to visualize massive network and software-related data, while efficiently create, render and interact with complex geometric network objects.

Unfortunately, with the known monitoring techniques, not always is possible, for the network managers, to monitor network relevant data of large and complex networks, in an efficient and easy way.

In fact, nowadays telecommunications networks are often represented by systems which are getting more complex in terms of information each day. In order to efficiently monitor such systems, a graphical representation of the elements and their associated data requires carefully planning.

A drawback of current methods for monitoring several elements and all their associated data of telecommunications systems is that a typical display is not able to accommodate all the network information at the same time in an ergonomic way, due to its limited size.

Moreover, the network managers typically desire to focus their monitoring actions on specific information about one or few more elements of the database; as a consequence, the monitoring of all the data, at the same time, is not always the best approach.

Known methods for monitoring network information allow network managers to select, for a communication network, "a view" which is relevant for their monitoring activity. Once the view has been chosen, network manager select network regions over which they desire to analyze the chosen view. A network region is typically a logical group of network entities.

The technical term "view" here denotes a window with a figure, a table or any visual creation representing certain processed information taken from the database elements and obtained by crossing the information of several of such elements. A view is typically used to navigate a hierarchy of information, open an editor, or display properties for the active editor

Examples of commonly used views in network information monitoring methods include properties views, logical views, resource allocation views, service views, customer views, alarm views and other views.

Properties views typically show property information of the network elements of the selected network region such as, for example, label, capacity, throughput, load, priority, status and so on. Logical views typically show logical information of the selected network region such as geographical information. Resource allocation views typically show resource allocation information of the regional network elements such as, for example, bandwidth usage for upstream and downstream. Service views typically show information on the allowed services over the regional network elements such as, for example, VoIP, VoD, gaming and so on. Customer views typically show information on the customers associated in the selected network region such as, for example, customer preferences and billing profiles.

The drawback of current network information monitoring methods is that network managers are limited to monitor in a single display only a single view.

It is therefore aim of the present invention to overcome the above-mentioned drawback, in particular by providing a method, a system and a computer program product for monitoring network information which enables monitoring different network information for different network region in a simple way.

The aforementioned aim is achieved by a method, a system and a computer program product 1 for monitoring information of a network which comprises a plurality of network elements groupable in one or more network regions, the invention comprising:
- selecting at least two network regions from the plurality of network elements;
- selecting for each of the selected network regions one or more views representing relevant information for the selected network region for monitoring purposes; and
- monitoring the network information of the selected network regions by means of the selected views arranged in one single display.

In the invention at least one selected view of at least one selected network region may be, advantageously, different from at least one of the selected view of the at least one other selected network region.

In the inventions the views may preferably be selected from the group consisting of:
- properties views;
- logical views;
- resource allocation views;
- service views;
- customer views.

The proposed invention enables network managers to monitor network information in an ergonomic way, by simply selecting the views they desire to monitor within one ore more network region.

The proposed invention enables network manager to monitor in a single display different views of one or more network regions. This capability is very useful for network managers; in fact they often require monitoring different types of information for different network regions. For example, with the proposed invention, network manager are enabled to monitor, in a single display, a customer view and a service view for an access network region, a resource allocation view for metropolitan network region and an alarm view for a core network region.

The invention will now be described in preferred but not exclusive embodiments with reference to the accompanying drawing, wherein:

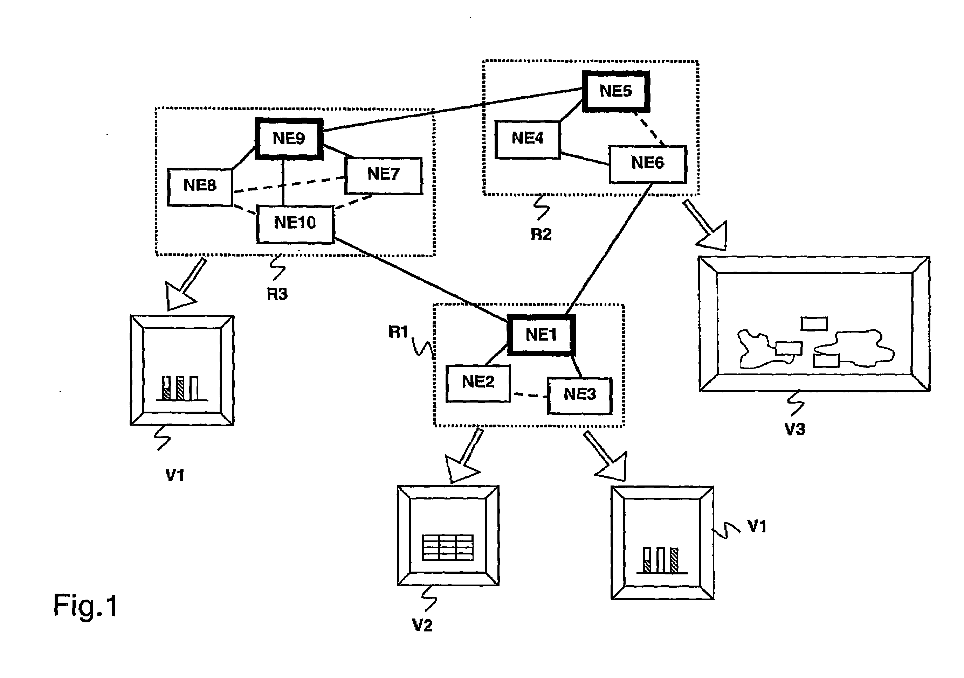

- Figure 1: is a block diagram illustrating different views for different network regions in an example embodiment according to the present invention.

Figure 1 shows a plurality of network elements NE1, NE2, .., NE10 within a communications network in an example embodiment according to the present invention.

The illustrated communication network is grouped in three sub-networks or network regions R1, R2, R2.

The first network region R1 has a corresponding view V1 attached to it. The panel V1 may for example be a resource allocation view showing the resource allocation information which is relevant to the network manager for monitoring the first network region R1. The second network region R2 has also a corresponding view V3 attached to it. This other panel V3 may for example be a logical view showing the geographical information which is relevant to the network manager for monitoring the second network region R2. Instead, the third network region R3 has two corresponding views V1, V2 attached to it. This other two panels V1, V2 may be proprieties views and resource allocation views according to the interest of the network manager for monitoring this specific third network region R3. In further embodiment of the present invention, a network region R1, R2, R3 may have no view or more than two views V1, V2, V3 according to the relevant requirements of the user who is monitoring the specific network region R1, R2, R3.

These view panels V1, V2, V3 are arranged within the display in which the general communications network is shown and are visible upon user request. The content of the view panels is selectable by the user, e.g. the network manager can decide where to monitor, for each selected network region R1, R2, R3 network information relating to a resource allocation view V1, a properties view V2 and/or a logical view V3.

According to the present invention, the network manager is able to select, for the selected network regions R1, R2, R3, one or more views V1, V2, V3 which may differ the one from the other. Then, the network manager is able to monitor, in the same single window, different multiple network information of different network regions R1, R2, R3.

| **List of reference signs** | |
|---|---|
| NE1, .. , NE10 | network elements |
| R1, R2, R3 | network region, region |

| **List of used acronyms** | |
|---|---|
| VoD | Video on Demand |
| VoIP | Voice over IP |

## Claims

1. A method for monitoring information of a network which comprises a plurality of network elements (NE1, NE3, NE10) groupable in one or more network regions (R1, R2, R3), said method comprising the steps of;
- selecting at least two network regions (R1, R2, R3) from said plurality of network elements (NE1, NE3, NE10);
- selecting for each of the selected network regions (R1, R2, R3) one or more views (V1, V2, V3) representing relevant information for the selected network region (R1, R2, R3) for monitoring purposes; and
- monitoring the network information of the selected network regions (R1, R2, R3) by means of the selected views (V1, V2, V3) arranged in one single display.

2. The method according to claim 1, wherein at least one selected view (V1, V2, V3) of at least one selected network region (R1, R2, R3) is different from at least one of the selected view (R1, R2, R3) of the at least one other selected network region (R1, R2, R3).

3. The method according to any of the preceding claims, wherein the views (V1, V2, V3) are selected from the group consisting of:
- properties views;
- logical views;
- resource allocation views;
- service views;
- customer views;
- alarm views.

4. A system having means for performing the steps of the method according to any of the claims 1 to 3.

5. A computer program product for performing steps of the method according to any of the claims 1 to 3.
